# EUROPÄISCHE PATENTANMELDUNG

(11) **EP 4 283 017 A1**
(43) Veröffentlichungstag der Anmeldung: **29.11.2023**
(21) Anmeldenummer: 22020234.5
(22) Anmeldetag: 25.05.2022
(51) Int. Cl.: C25B 1/042, C25B 15/08, H01M 8/00

(54) **VERFAHREN UND ANLAGE ZUR DURCHFÜHRUNG EINES STOFFUMWANDELNDEN VERFAHRENS UNTER VERWENDUNG EINER HOCHTEMPERATURZELLE**

(71) Anmelder: Linde GmbH, 82049 Pullach (DE); Technische Universität München, 80333 München (DE)
(72) Erfinder: Taube, Carsten, 82049 Pullach (DE); Dillig, Marius, 82049 Pullach (DE); Korn, Wibke, 82049 Pullach (DE); Peschel, Andreas, 82049 Pullach (DE); Miklos, David, 82049 Pullach (DE); Eitzenberger, Katrin, 82049 Pullach (DE); Klein, Harald, 82090 München (DE); Hemauer, Johanna, 82090 München (DE)
(74) Vertreter: Fischer, Werner

(57) **Zusammenfassung**

Es wird ein Verfahren (100) zur Durchführung eines stoffumwandelnden Verfahrens vorgeschlagen, bei dem eine oder mehrere Hochtemperaturzellen (111, 112, 113) verwendet wird oder werden, wobei der einen oder den mehreren Hochtemperaturzellen (111, 112, 113) oder einer oder mehreren stromauf der einen oder mehreren Hochtemperaturzellen (111, 112, 113) angeordneten Prozesseinheiten ein Dampf enthaltender Stoffstrom zugeführt wird, wobei der Dampf unter Verwendung eines Dampferzeugers (160) bereitgestellt wird, der über eine Kesselspeisewasserleitung (106) aus einer Wasserbereitstellungseinrichtung (170) mit Kesselspeisewasser gespeist wird. Es ist vorgesehen, dass das Kesselspeisewasser mit Ammoniak beaufschlagt wird. Eine entsprechende Anlage ist ebenfalls Gegenstand der Erfindung.

## Beschreibung

Die Erfindung betrifft ein Verfahren und eine Anlage zur Durchführung eines stoffumwandelnden Verfahrens unter Verwendung einer oder mehrerer Hochtemperaturzellen.

### Hintergrund

Zur Herstellung von Wasserstoff im großtechnischen Maßstab ist eine Reihe unterschiedlicher Verfahren bekannt und in gängigen Nachschlagewerken, beispielsweise im Artikel "Hydrogen" in Ullmann's Encyclopedia of Industrial Chemistry, 15. Juni 2000, DOI: 10.1002/14356007.a13_297, Abschnitt 4, "Production", beschrieben. Die Herstellung von Wasserstoff kann beispielsweise aus Kohle und Kohlenwasserstoffen in Form von Koksofengas oder allgemein durch die Vergasung, von gasförmigen, festen und flüssigen Kohlenstoffquellen wie Erdgas, Naphtha oder Kohle, erfolgen. Ein weiterer Weg zur Herstellung von Wasserstoff aus entsprechenden Kohlenstoffquellen umfasst die nichtkatalytische Partielle Oxidation (POX) und die katalytische Reformierung in unterschiedlichen Ausgestaltungen wie beispielsweise die Dampfreformierung oder die Autothermalreformierung. Auch kombinierte Verfahren können verwendet werden.

Daneben kann Wasserstoff aber auch elektrolytisch aus Wasser hergestellt werden, wie in dem erwähnten Artikel in Ullmann's Encyclopedia of Industrial Chemistry insbesondere in Abschnitt 4.2, "Electrolysis" erläutert.

Bei der klassischen Wasserelektrolyse wird eine wässrige alkalische Lösung, typischerweise von Kaliumhydroxid, als Elektrolyt verwendet (AEL, alkalische Elektrolyse). Mit einer uni- oder bipolaren Elektrodenanordnung erfolgt hierbei die Elektrolyse bei Atmosphärendruck oder - im industriellen Maßstab - auch bei einem Überdruck von bis zu 30 bar. Neuere Entwicklungen bei der Wasserelektrolyse sehen die Verwendung von protonenleitenden lonenaustauschmembranen (PEM, Proton Exchange Membrane) vor, an deren Anodenseiet das zu elektrolysierende Wasser bereitgestellt wird. Die genannten Verfahren zählen zu den sogenannten Niedertemperaturverfahren, bei denen das zu elektrolysierende Wasser in der Flüssigphase vorliegt.

Daneben ist auch die Dampfelektrolyse bekannt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden kann. Letztere umfassen insbesondere dotiertes Zirkondioxid oder dotierte Oxide seltener Erden, die bei mehr als 600 °C technisch signifikant leitfähig sind. Zu Verfahren, die unter Verwendung derartiger Hochtemperaturzellen durchgeführt werden, sei auf Fachliteratur wie Hauch et.al., "Recent advances in solid oxide cell technology for electrolysis", Science 2020, Bd. 370, Nr. 6513, und Ebbesen et. al., "Poisoning of Solid Oxide Electrolysis Cells by Impurities", Journal of The Electrochemical Society, Bd. 157, Nr. 10, verwiesen.

Ausgestaltungen der vorliegenden Erfindung erstrecken sich insbesondere auf Elektrolysen unter Einsatz von Hochtemperaturzellen, können auch Brennstoffzellenverfahren betreffen, bei denen Hochtemperaturzellen verwendet werden. Daher wird hier auch von Verfahren und Anlagen zur Durchführung eines stoffumwandelnden Verfahrens unter Verwendung einer oder mehrerer Hochtemperaturzellen gesprochen, wobei eine Hochtemperaturzelle eine Festoxidelektrolyse- oder Brennstoffzelle (Solid Oxide Fuel Cell, SOFC) sein kann. Die Hochtemperaturzelle(n) kann bzw. können insbesondere bei Temperaturen von mehr als den erwähnten 600 °C betrieben werden.

Stoffumwandelnde Verfahren unter Verwendung entsprechender Hochtemperaturzellen sind derzeit noch nicht in kommerzieller Größe verfügbar bzw. üblich. Die vorliegende Erfindung stellt sich die Aufgabe, in diesem Zusammenhang bestehende Schwierigkeiten auszuräumen.

### Offenbarung der Erfindung

Vor diesem Hintergrund werden ein Verfahren und eine Anlage zur Durchführung eines stoffumwandelnden Verfahrens unter Verwendung einer oder mehrerer Hochtemperaturzellen, insbesondere einer oder mehrerer Festoxidzellen, beispielsweise einer oder mehrerer Festoxid-Elektrolysezellen oder Festoxid-Brennstoffzellen, mit den jeweiligen Merkmalen der unabhängigen Patentansprüche vorgeschlagen. Ausgestaltungen der vorliegenden Erfindung sind jeweils Gegenstand der abhängigen Patentansprüche sowie der nachfolgenden Beschreibung.

Die vorliegende Erfindung wird nachfolgend überwiegend unter Bezugnahme auf Hochtemperaturelektrolysen beschrieben. Wie erwähnt, betreffen Ausgestaltungen der Erfindung jedoch auch andere stoffumwandelnde Verfahren unter Einsatz von entsprechenden Hochtemperaturzellen wie Hochtemperaturbrennstoffzellen.

Verfahren und Anlagen zur Hochtemperaturelektrolyse benötigen aufgereinigtes Kesselspeisewasser (engl. boiler feed water, BFW) für die Erzeugung von Niederdruckdampf zur Speisung der Elektrolysezellen bzw. entsprechender Elektroden- oder Zellenstapel (engl. stacks, nachfolgend als "Elektrolysezellen oder Zellenstapel" bezeichnet). Für Großanlagen ist hierbei ein erheblicher Rohrleitungsaufwand erforderlich, da die Aufbereitung des Kesselspeisewassers und die Dampferzeugung typischerweise in einer zentralen Einheit durchgeführt werden, während sogenannte Hotboxen zur Aufnahme der Zellenstapel sowie die Zellenstapel selbst typischerweise als kleine(re) modulare Einheiten realisiert werden, die durch eine Addition weiterer Einheiten skaliert werden können. In Anlagen gemäß dem derzeitigen Stand der Technik werden Rohrleitungen und Equipment aus rostfreiem Stahl verwendet.

Wie erfindunggsgemäß erkannt wurde, stellt die die Alkalisierung von Kesselspeisewasser und/oder Dampf mit Ammoniak eine vorteilhafte Lösung zur Reduzierung des Materialaufwands in entsprechenden Verfahren dar. Ammoniak hat keine schädlichen Auswirkungen auf katalytische Oberflächen und wird nur in Wasserstoff und Stickstoff umgewandelt. Eine typische Ammoniakkonzentration in einer Hauptwasserversorgung kann dabei zwischen 0,5 und 10 ppm betragen. Daraus folgt, dass ein durch die Elektrolyse gebildetes Wasserstoffprodukt nur geringe Konzentrationen von Stickstoff enthalten wird, was mit vielen Anwendungen des hergestellten Wasserstoffs kompatibel ist, insbesondere für eine nachgeschaltete Synthese (bspw. zur Herstellung von Ammoniak). Selbst wenn der Stickstoffgehalt zu hoch ist, müssen lediglich die Einheiten zur Aufbereitung des Wasserstoffs (in der Regel ein Trockner) so ausgelegt werden, dass sie Stickstoffspuren entsprechend entfernen können. Ausgestaltungen der vorliegenden Erfindung betreffen besonders vorteilhafte Positionen zur Ammoniakzugabe.

Durch den Einsatz der vorliegenden Erfindung wird in Hochtemperaturelektrolysen, die beispielsweise Festoxidelektrolysezellen oder Elektrolysezellen mit protonenleitenden Membranen (bzw. entsprechende Zellenstapel) nutzen, aber auch in entsprechenden Brennstoffzellen, die Verwendung von Kohlenstoffstahl in Rohrleitungen zu den Dampferzeugern und entsprechendem Equipment, zu den Hotboxen, die die Elektrolysezellen bzw. Brennstoffzellen aufnehmen, und in bestimmten Fällen sogar innerhalb der Hotboxen möglich, so dass sich beträchtliche Vorteile hinsichtlich Wirtschaftlichkeit und Verarbeitbarkeit der eingesetzten Werkstoffe (bspw. Schweißbarkeit) ergeben.

Die vorliegende Erfindung schlägt dabei insgesamt ein Verfahren zur Durchführung eines stoffumwandelnden Verfahrens unter Einsatz einer oder mehrerer Hochtemperaturzellen vor, bei dem der einen oder den mehreren Hochtemperaturzellen oder einer oder mehreren stromauf der einen oder mehreren Hochtemperaturzellen angeordneten und optional vorhandenen Prozesseinheiten ein Dampf (und ggf. weitere Komponenten, insbesondere im Fall einer Ko-Elektrolyse wie unten erläutert) enthaltender Stoffstrom zugeführt wird. Im Fall einer oder mehrerer Elektrolysezellen kann dieser bzw. diesen kathodenseitig über eine oder mehrere kathodenseitige Zufuhrleitungen ein Dampf (und ggf. weitere Komponenten, wie erwähnt) enthaltender Stoffstrom zugeführt und über eine oder mehrere kathodenseitige Abfuhrleitungen kathodenseitig ein Wasserstoff und Dampf (und auch hier ggf. weitere Komponenten) enthaltender Stoffstrom entnommen werden. Hierbei wird der Dampf unter Verwendung eines Dampferzeugers bereitgestellt, der über eine Kesselspeisewasserleitung aus einer Wasserbereitstellungseinrichtung, beispielsweise einer Wasseraufbereitung oder einem Tank bzw. einer Leitung, mit Kesselspeisewasser gespeist wird. Die Wasserbereitstellungseinrichtung kann hierbei - beispielsweise über eine oder mehrere Wasserversorgungsleitungen - mit aufzubereitendem Wasser gespeist werden. In dem vorgeschlagenen Verfahren wird das Kesselspeisewasser mit Ammoniak beaufschlagt, der beispielsweise in die Wasserbereitstellungseinrichtung und/oder in zumindest eine der Kesselspeisewasserleitungen oder an einer anderen Stelle eingespeist werden kann.

Die Ammoniakdosierung zur Alkalisierung kann in einem Entgasungssystem stromauf einer Kesselspeisewasserpumpe und des hiermit gespeisten Dampferzeugers erfolgen, allgemeiner gesprochen auch in einer Wasseraufbereitung, die in diesem Fall die Wasserbereitstellungseinrichtung darstellt, oder ggf. auch stromab eines Kondensatabscheiders stromab der Elektrolyseeinheit, falls verwendet, da der gesamte enthaltende Ammoniak in den Festoxidelektrolysezellen abgebaut wird und damit nicht in das Kathodengas übergeht.

Ausgestaltungen der Erfindung können umfassen, dass eine oder mehrere Wasserversorgungsleitungen bereitgestellt ist oder sind, über die der Wasseraufbereitung Frischwasser zugeführt wird bzw. werden. Die Wasserbereitstellungseinrichtung kann in Ausgestaltungen der Erfindung als Wasseraufbereitungseinrichtung bereitgestellt sein, und der Ammoniak kann in eine Rückführleitung eingespeist werden, über die in die Wasseraufbereitung Kondensatwasser zurückgeführt wird. Das Kondensatwasser kann in einer Wasserabscheidung aus dem kathodenseitig entnommenen, Wasserstoff und Dampf enthaltenden Stoffstrom abgeschieden werden.

Die in Ausgestaltungen der Erfindung in der erläuterten Weise erfolgende Alkalisierung von Kesselspeisewasser mit Ammoniak zur Dampferzeugung in Hochtemperaturelektrolyseeinrichtungen oder anderen entsprechenden Verfahren ermöglicht die Verwendung von Rohrleitungen und Komponenten aus Kohlenstoffstahl in entsprechenden Großanlagen. Kohlenstoffstahlmaterial begrenzt die Gesamtkosten und stärkt daher die Wettbewerbsfähigkeit entsprechender Verfahren. Ammoniak wird über die Elektroden in der Elektrolyse zu Wasserstoff und Stickstoff zersetzt. Es sind keine erhöhten Degradationseffekte der Ammoniakdosierung auf die katalytische Leistung zu erwarten, und daher ergeben sich keine oder nur geringe Auswirkungen auf Prozessleistung und Betriebskosten.

Generell soll hier unter "Kohlenstoffstahl" (auch Karbonstahl) ein Stahl verstanden werden, der neben seinem Hauptbestandteil Eisen als Nebenbestandteil hauptsächlich Kohlenstoff enthält. Der Kohlenstoffgehalt kann bis zu 2,1% betragen. Es handelt sich also um einen unlegierten Stahl, im Gegensatz zu rostfreiem Stahl, der sich insbesondere durch einen Anteil von mindestens 10,5 bis 13 Prozent Chrom auszeichnet, das im austenitischen oder ferritischen Mischkristall gelöst ist.

In Ausgestaltungen der Erfindung kann bzw. können also zumindest eine der mehreren kathodenseitigen Zufuhrleitungen, und/oder die Kesselspeisewasserleitung, allgemeiner eine oder mehrere wasserführende Strukturen stromab einer zur Beaufschlagung des Wassers mit Ammoniak vorgesehenen Ammoniakeinspeisung zumindest abschnittsweise aus Kohlenstoffstahl ausgebildet sein.

In Ausgestaltungen der vorliegenden Erfindung wird das Wasser in einer Menge mit dem Ammoniak beaufschlagt, die derart bemessen ist, dass der Ammoniak (zumindest) in der Kesselspeisewasserleitung in einem Gehalt von 0.5 bis 10 ppm vorliegt. Auf diese Weise ergibt sich eine vorteilhafte Alkalisierung bei gleichzeitig geringer stofflicher Belastung der stromabwärtigen Komponenten und Verfahren. Insbesondere kann der Ammoniak in der einen oder in den mehreren Elektrolysezellen (überwiegend oder vollständig) zu Stickstoff und Wasserstoff umgesetzt werden, die in den kathodenseitig entnommenen, Wasserstoff und Dampf enthaltenden Stoffstrom überführt werden.

In einem entsprechenden Verfahren kann das Wasser mit Ammoniak in flüssiger Form beaufschlagt werden, wie beispielsweise in der europäischen Anmeldung 21020607.4 offenbart.

Wie bereits erwähnt, kann ein Verfahren gemäß Ausgestaltungen der Erfindung bei unterschiedlichen Elektrolysearten zum Einsatz kommen, wobei eine Hochtemperaturelektrolyse insbesondere unter Verwendung einer oder mehrere Festoxidelektrolysezellen und/oder einer oder mehrerer Protonenaustauschmembranen durchgeführt werden kann. Entsprechendes gilt auch beispielsweise für Brennstoffzellenverfahren.

Ausgestaltungen der Erfindung, bei denen eine Elektrolyse zur Herstellung von Wasserstoff zum Einsatz kommt, eignen sich insbesondere zur Kombination mit einem chemischen Downstreamprozess für die Nutzung des Wasserstoffs, wie beispielsweise eine Ammoniak- oder Methanolsynthese oder ein Fischer-Tropsch-Verfahren, wo wenige ppm Stickstoff im Wasserstoffprodukt toleriert werden können.

Insbesondere kann in einer Ausgestaltung der Erfindung also ein Wasserstoffprodukt bereitgestellt werden. So kann beispielsweise der zuvor erwähnten Wasserabscheidung ein Wasserstoffprodukt entnommen oder der Wasserabscheidung Rohwasserstoff entnommen und zu einem Wasserstoffprodukt aufbereitet werden, wobei in beliebigen Ausgestaltungen der Erfindung das Wasserstoffprodukt insbesondere einer Ammoniaksynthese zugeführt werden kann, in der jener Ammoniak (als Teil einer Gesamtammoniakmenge) gebildet wird, der zur Beaufschlagung des Wassers verwendet wird und in Ausgestaltungen der Erfindung in die Wasseraufbereitung und/oder in die Kesselspeisewasserleitung eingespeist wird.

Die vorliegende Erfindung eignet sich auch insbesondere für den Einsatz im Zusammenhang mit großskaligen Festoxid-Brennstoffzellensystemen, die mit kohlenwasserstoffbasierten Brennstoffen, z. B. Erdgas oder sogar höheren Kohlenwasserstoffen betrieben werden können, wenn hierbei eine Dampferzeugung erforderlich ist. Rohrleitungen und anderes Equipment aus Kohlenstoffstahl sind hier ebenfalls von Vorteil, da die Investitionskosten für Material reduziert werden.

Typischerweise erfordern in solchen Fällen eine Prereformereinheit oder das direkte interne Reformingverfahren zusätzlichen Dampf, um die Reformierungsreaktion zu ermöglichen und die Bildung von festen Kohlenstoffablagerungen auf den Katalysatoroberflächen oder auf den Elektroden der Brennstoffzelle zu verhindern. Da die Technologie der Festoxidelektrolyse und der Festoxidbrennstoffzelle auf Zellebene eng verwandt sind, wird der im Dampf enthaltene Ammoniak ebenfalls abgebaut. Kein zusätzliches Degradationsrisiko ist für die Festoxid-Brennstoffzelle zu erwarten. In einer entsprechenden Ausgestaltung der Erfindung wird bzw. werden die eine oder die mehreren Hochtemperaturzellen also als Hochtemperatur-Brennstoffzelle(n) betrieben und dieser bzw. diesen oder einer oder mehreren stromauf der einen oder mehreren Hochtemperaturzelle(n) angeordneten Prozesseinheit(en), hier insbesondere einer oder mehreren Vorreformierungseinheiten, wird oder werden neben einem kohlenwasserstoffhaltigen Stoffstrom der erwähnte, Dampf enthaltende Stoffstrom zugeführt, der entsprechend ammoniakhaltig ist.

In Ausgestaltungen der vorliegenden Erfindung kann eine Hochtemperaturelektrolyse auch als Koelektrolyse von Wasser und Kohlendioxid durchgeführt werden, wobei der Dampf enthaltende Stoffstrom in diesem Fall auch Kohlendioxid enthält und der kathodenseitig entnommene, Wasserstoff und Dampf enthaltende Stoffstrom ferner Kohlenmonoxid enthält. Auch in derartigen Verfahren entfaltet die vorliegende Erfindung ihre Vorteile, ebenso wie beispielsweise in einem Verfahren, bei dem die Hochtemperaturelektrolyse als Schmelzkarbonatelektrolyse durchgeführt wird.

Eine Anlage zur Durchführung eines stoffumwandelnden Verfahrens mit einer oder mehreren Hochtemperaturzellen (111, 112, 113) ist ebenfalls Gegenstand der Erfindung, wobei die Anlage dafür eingerichtet ist, der einen oder den mehreren Hochtemperaturzellen (111, 112, 113) oder einer oder mehreren stromauf der einen oder mehreren Hochtemperaturzellen (111, 112, 113) angeordneten Prozesseinheiten einen Dampf enthaltenden Stoffstrom zuzuführen, wobei die Anlage ferner einen Dampferzeuger aufweist und dazu eingerichtet ist, den Dampf unter Verwendung des Dampferzeugers bereitzustellen und dabei den Dampferzeuger über eine Kesselspeisewasserleitung aus einer Wasserbereitstellungseinrichtung mit Kesselspeisewasser zu speisen. Hierbei sind Mittel bereitgestellt, die dafür eingerichtet sind, das Wasser mit Ammoniak zu beaufschlagen.

Zu Merkmalen und Vorteilen einer entsprechenden Anlage und möglicher Ausgestaltungen sei auf die obigen Erläuterungen bezüglich des erfindungsgemäßen Verfahrens und seiner Ausgestaltungen ausdrücklich verwiesen.

Anlagen gemäß Ausgestaltungen der vorliegenden Erfindung weisen insbesondere Mittel auf, die sie zur Durchführung eines vorstehend beschriebenen Verfahrens und entsprechender Ausgestaltungen ertüchtigen. Die erfindungsgemäße Anlage bzw. deren vorteilhafte Ausgestaltungen profitieren dementsprechend von den Vorteilen des jeweils entsprechenden Verfahrens in analoger Weise und umgekehrt.

Im Folgenden werden weitere Merkmale und Vorteile der vorliegenden Erfindung anhand von Ausführungsbeispielen unter Bezugnahme auf die beiliegende Zeichnung näher erläutert, wobei die Zeichnungen eine Hochtemperaturelektrolyse betreffen, die Erfindung jedoch in gleicher Weise auch für Brennstoffzellen einsetzbar ist.

### Kurze Beschreibung der Figuren

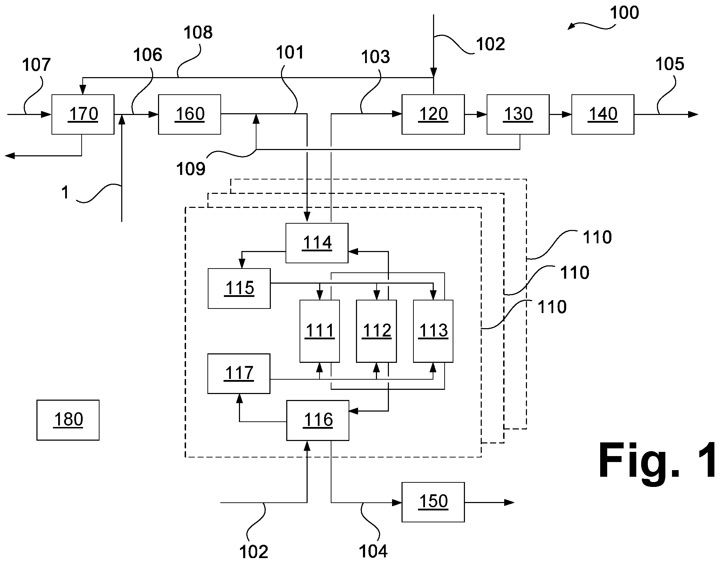

Figur 1 zeigt ein Verfahren zur Durchführung einer Elektrolyse gemäß einer Ausgestaltung der Erfindung in Form eines vereinfachten Blockdiagramms.

In den Figuren werden Verfahrensschritte und Vorrichtungskomponenten teilweise gemeinsam beschrieben bzw. mit identischen Bezugszeichen angegeben. Generell betreffen Erläuterungen zu Verfahrensschritten die entsprechenden Vorrichtungskomponenten in gleicher Weise und umgekehrt.

### Ausführungsform(en) der Erfindung

Figur 1 zeigt, insgesamt mit 100 bezeichnet, ein Verfahren zur Durchführung einer Elektrolyse gemäß einer Ausgestaltung der Erfindung in Form eines vereinfachten Blockdiagramms.

Kern des Verfahrens 100 sind ein oder mehrere, im dargestellten Beispiel 3, Elektrolyseeinheiten 110, die jeweils in an sich bekannten sogenannten Hotboxen, also (wärme)isolierenden Einhausungen geeigneter Art, angeordnet sein können. In den Elektrolyseeinheiten 110 sind jeweils mehrere, im dargestellten Beispiel ebenfalls drei, Elektrolysezellen bzw. Zellenstapel 111, 112, 113, angeordnet, denen im dargestellten Beispiel über einen Zu-/Ablaufwärmetauscher (engl. feed/effluent heat exchanger) 114 und einen Nachheizer 115 kathodenseitig Dampf aus einer Leitung 101 sowie über einen Zu-/Ablaufwärmetauscher 116 sowie einen Nachheizer 117 anodenseitig Luft aus einer Leitung 102 zur Spülung der Anodenseite zugeführt wird.

Kathodenseitig aus den Zellenstapeln 111, 112, 113, abgeführtes Gas, das Wasserdampf und Elektrolysewasserstoff enthält, wird zusammengefasst, durch den Zu-/Ablaufwärmetauscher 114 geführt und über eine Leitung 103 ausgeleitet. Anodenseitig abgeführtes Gas, das Luft und Elektrolysesauerstoff enthält, wird durch den Zu-/Ablaufwärmetauscher 117 geführt und über eine Leitung 104 ausgeleitet.

Zur Aufbereitung des kathodenseitig abgeführten Gases aus Leitung 103 können eine Kühlung und Wasserabscheidung 120, eine Verdichtung 130 und eine Wasserstoffaufreinigung 140 verwendet werden. Auf diese Weise kann über eine Leitung 105 ein Wasserstoffprodukt aus dem Verfahren 100 ausgeleitet werden. Zur Ableitung des anodenseitig abgeführten Gases aus Leitung 104 aus dem Verfahren 100 und zum Bewirken einer Durchströmung der Anodenseite der Zellenstapel 111, 112, 113 mit Luft kann beispielsweise ein Gebläse 150 verwendet werden.

Zur Bereitstellung des Dampfs in Leitung 101 ist ein Dampferzeuger 160 vorgesehen, der über eine Leitung 106 mit Kesselspeisewasser aus einer Wasseraufbereitung 170 gespeist werden kann. Der Wasseraufbereitung 170 kann über eine Leitung 107 Frischwasser zugeführt und über eine nicht gesondert bezeichnete Leitung Abwasser entnommen werden. Über eine Leitung 108 kann aus der Kühlung und Wasserabscheidung 120 Recyclewasser in die Wasseraufbereitung 170 zurückgeführt werden. Über eine Leitung 109 kann Wasserstoff aus der Verdichtung 130 in das Verfahren zurückgeführt werden.

Steuer- und Kontrolleinrichtungen sowie elektrische Apparate sind summarisch mit 180 angegeben und können dazu eingerichtet sein, beispielsweise die Zellenstapel 111, 112, 113 mit Spannung zu versorgen und entsprechende Steuer- und Regelaufgaben zu übernehmen, wie hier nicht gesondert dargestellt.

Gemäß Ausgestaltungen der Erfindung kann über Leitungen 1 und/oder 102 Ammoniak in die Leitungen 106 und/oder 108 dosiert werden. Auf diese Weise ist es möglich, zumindest eine der Leitungen 106, 101 und 108 zumindest abschnittsweise aus Kohlenstoffstahlt auszubilden. Ebensolches gilt ggf. für die den Dampf aus Leitung 101 auf die die Zellenstapel 111, 112, 113 verteilenden, hier nicht gesondert bezeichneten Leitungen. In den die Zellenstapeln 111, 112, 113 wird der Ammoniak typischerweise umgesetzt, so dass die das Gas kathodenseitig abführenden Leitungen und Leitung 103 insbesondere aus Edelstahl hergestellt sein können.

## Patentansprüche

1. Verfahren (100) zur Durchführung eines stoffumwandelnden Verfahrens, bei dem eine oder mehrere Hochtemperaturzellen (111, 112, 113) verwendet wird oder werden, wobei der einen oder den mehreren Hochtemperaturzellen (111, 112, 113) oder einer oder mehreren stromauf der einen oder mehreren Hochtemperaturzellen (111, 112, 113) angeordneten Prozesseinheiten ein Dampf enthaltender Stoffstrom zugeführt wird, wobei der Dampf unter Verwendung eines Dampferzeugers (160) bereitgestellt wird, der über eine Kesselspeisewasserleitung (106) aus einer Wasserbereitstellungseinrichtung (170) mit Kesselspeisewasser gespeist wird, **dadurch gekennzeichnet, dass** das Kesselspeisewasser mit Ammoniak beaufschlagt wird.

2. Verfahren (100) nach Anspruch 1, bei dem das stoffumwandelnde Verfahren in Form einer Hochtemperaturelektrolyse durchgeführt wird, wobei die eine oder die mehreren Hochtemperaturzellen (111, 112, 113) als eine oder mehrere Hochtemperatur-Elektrolysezellen (111, 112, 113) betrieben wird oder werden, wobei der einen oder den mehreren Hochtemperatur-Elektrolysezellen (111, 112, 113) kathodenseitig über eine oder mehrere kathodenseitige Zufuhrleitungen (101) der Dampf enthaltende Stoffstrom zugeführt und über eine oder mehrere kathodenseitige Abfuhrleitungen (103) kathodenseitig ein Wasserstoff und Dampf enthaltender Stoffstrom entnommen wird oder werden.

3. Verfahren (100) nach Anspruch 2, bei dem die Wasserbereitstellungseinrichtung (170) als Wasseraufbereitungseinrichtung bereitgestellt ist, wobei der kathodenseitig entnommene, Wasserstoff und Dampf enthaltende Stoffstrom einer Wasserabscheidung (120) unterworfen wird und zumindest eine der Wasserversorgungsleitungen (107, 108) eine Rückführleitung (108) ist, über die in der Wasserabscheidung (120) abgeschiedenes Kondensatwasser in die Wasserbereitstellungseinrichtung (170) zurückgeführt wird.

4. Verfahren nach Anspruch 3, bei dem zumindest eine wasserführende Struktur stromab einer zur Beaufschlagung des Wassers mit Ammoniak vorgesehenen Ammoniakeinspeisung zumindest abschnittsweise aus Kohlenstoffstahl ausgebildet ist oder sind.

5. Verfahren (100) nach einem der Ansprüche 2 bis 4, bei dem das Wasser in einer Menge mit dem Ammoniak beaufschlagt wird, die derart bemessen ist, dass Ammoniak in der Kesselspeisewasserleitung (106) in einem Gehalt von 0.5 bis 10 ppm vorliegt.

6. Verfahren (100) nach einem der Ansprüche 2 bis 5, bei dem der Ammoniak in der einen oder in den mehreren Elektrolysezellen (111, 112, 113) zu Stickstoff und Wasserstoff umgesetzt wird, die in den kathodenseitig entnommenen, Wasserstoff und Dampf enthaltenden Stoffstrom überführt werden.

7. Verfahren (100) nach einem der Ansprüche 2 bis 6, bei dem das Wasser mit dem Ammoniak in flüssiger Form beaufschlagt wird.

8. Verfahren (100) nach einem der Ansprüche 2 bis 7, bei dem die Hochtemperaturelektrolyse unter Verwendung einer oder mehrere Festoxidelektrolysezellen und/oder einer oder mehrerer Protonenaustauschmembranen durchgeführt wird.

9. Verfahren (100) nach einem der Ansprüche 2 bis 8, bei dem ein Wasserstoffprodukt bereitgestellt wird, wobei das Wasserstoffprodukt einer Ammoniaksynthese zugeführt wird, in der Ammoniak gebildet wird, der teilweise zur Beaufschlagung des Wassers verwendet wird.

10. Verfahren (100) nach einem der Ansprüche 2 bis 9, bei dem die Hochtemperaturelektrolyse als Koelektrolyse von Wasser und Kohlendioxid durchgeführt wird, wobei der Dampf enthaltende Stoffstrom ferner Kohlendioxid enthält und der kathodenseitig entnommene, Wasserstoff und Dampf enthaltende Stoffstrom ferner Kohlenmonoxid enthält.

11. Verfahren (100) nach einem der Ansprüche 2 bis 10, bei dem die Hochtemperaturelektrolyse als Schmelzkarbonatelektrolyse durchgeführt wird.

12. Verfahren (100) nach Anspruch 1, bei dem die eine oder die mehreren Hochtemperaturzellen (111, 112, 113) als eine oder mehrere Hochtemperatur-Brennstoffzellen betrieben wird oder werden, wobei der einen oder den mehreren Hochtemperatur-Brennstoffzellen oder der einen oder den mehreren stromauf der einen oder mehreren Hochtemperaturzellen angeordneten Prozesseinheiten der Dampf enthaltende Stoffstrom und ein kohlenwasserstoffhaltiger Stoffstrom zugeführt wird oder werden.

13. Anlage zur Durchführung eines stoffumwandelnden Verfahrens, mit einer oder mehreren Hochtemperaturzellen (111, 112, 113) und Mitteln, die dafür eingerichtet sind, der einen oder den mehreren Hochtemperaturzellen (111, 112, 113) oder einer oder mehreren stromauf der einen oder mehreren Hochtemperaturzellen (111, 112, 113) angeordneten Prozesseinheiten einen Dampf enthaltenden Stoffstrom zuzuführen, wobei die Anlage einen Dampferzeuger aufweist und dafür eingerichtet ist, den Dampf mittels eines Dampferzeugers (160) bereitzustellen, und dabei den Dampferzeuger über eine Kesselspeisewasserleitung (106) aus einer Wasserbereitstellungseinrichtung (170) mit Kesselspeisewasser zu speisen, **dadurch gekennzeichnet, dass** Mittel bereitgestellt sind, die dafür eingerichtet sind, das Wasser mit Ammoniak zu beaufschlagen.

14. Anlage nach Anspruch 13, die zur Durchführung eines Verfahrens nach einem der Ansprüche 1 bis 12 eingerichtet ist.
